# DEMANDE DE BREVET EUROPEEN

(11) **EP 4 822 401 A1**
(43) Date de publication de la demande: **14.10.2026**
(21) Numéro de dépôt: 26171169.1
(22) Date de dépôt: 08.04.2026
(51) Int. Cl.: G01S 19/20, G01S 19/21

(54) **PROCÉDÉ DE VÉRIFICATION D'INTÉGRITÉ DES MESURES ACQUISES PAR UNE PLURALITÉ DE RÉCEPTEURS GNSS, PROGRAMME D ORDINATEUR ET SYSTÈME DE VÉRIFICATION ASSOCIÉS**

(30) Priorité: 08.04.2025 FR 2503710
(71) Demandeur: THALES, 92190 Meudon (FR); Institut Mines Telecom, 91120 Palaiseau (FR)
(72) Inventeur: VINCE, Victor, 92622 GENNEVILLIERS CEDEX (FR); HEURGUIER, Dominique, 92622 GENNEVILLIERS CEDEX (FR); VERVISCH-PICOIS, Alexandre, 91011 EVRY CEDEX (FR); RUBIO HERNAN, José Manuel, 91011 EVRY CEDEX (FR)
(74) Mandataire: Lavoix

(57) **Abrégé**

La présente invention concerne un procédé de vérification d'intégrité des mesures acquises par une pluralité de récepteurs GNSS, le procédé comprenant les étapes suivantes :
- pour chaque récepteur GNSS :
+ détermination (110) d'un vecteur de résidus à partir des mesures GNSS acquises par ce récepteur, au moins une composante de chaque vecteur de résidus correspondant à la différence d'un décalage Doppler réel et d'un décalage Doppler théorique par rapport à un satellite visible ;
+ détermination (130) d'une matrice élémentaire de covariance des résidus à partir dudit vecteur de résidus ;

- composition (140) d'une matrice globale de covariance à partir de l'ensemble des matrices élémentaires de covariance ;
- détermination (150) d'une variable de test à partir de cette matrice de covariance ;
- comparaison (160) de la variable de test avec un seuil prédéterminé.

## Description

La présente invention concerne un procédé de vérification d'intégrité des mesures acquises par une pluralité de récepteurs GNSS. La présente invention concerne également un programme d'ordinateur ainsi qu'un système de vérification associés à ce procédé.

La présente invention s'appuie notamment sur une méthode de contrôle d'intégrité collaborative existante décrite par J. RIFE dans l'article « Collaboration-Enhanced Receiver Integrity Monitoring (CERIM) » (publié en 2011 par « 14th International IEEE Conference on Intelligent Transportation Systems (ITSC) »).

L'invention se rapporte plus particulièrement au domaine de la navigation collaborative mise en œuvre par plusieurs récepteurs GNSS.

Par « récepteur GNSS » (de l'anglais Global Navigation Satellite System), on entend tout récepteur qui est apte à calculer sa position à partir des signaux issus de satellites faisant partie d'un système de navigation globale par satellites, appelé également système GNSS. Les signaux émis par ce système sont appelés par la suite signaux GNSS.

Dans le cadre de la navigation collaborative, plusieurs récepteurs GNSS transmettent leurs mesures relatives aux signaux GNSS reçus à une unité centrale.

Une telle unité centrale est alors apte à vérifier l'intégrité de ces mesures pour éventuellement détecter et éliminer des mesures qui sont corrompues.

De telles mesures peuvent être corrompues par exemple suite à un brouillage volontaire ou involontaire des signaux GNSS.

L'invention trouve donc particulièrement son application dans le domaine où une corruption des signaux GNSS est hautement probable.

Dans l'état de la technique, il existe déjà des méthodes permettant de vérifier l'intégrité des mesures acquises par plusieurs récepteurs GNSS, notamment dans le cadre d'une navigation collaborative.

Certaines de ces méthodes proposent l'estimation théorique de la covariance des mesures acquises par les différents récepteurs.

Il existe également des méthodes proposant une estimation empirique de la covariance des mesures.

Les méthodes existantes ne permettent toutefois pas de détecter l'ensemble des défaillances ou des attaques en intégrité.

Par exemple, certaines méthodes existantes ne permettent pas de détecter des incohérences liées aux multi-trajets bien que leurs niveaux soient généralement atténués par rapport aux trajets directs. En particulier, les incohérences liées aux multi-trajets (ou « multipath » en anglais) présentent des interférences causées lorsque les signaux GNSS rebondissent sur des objets comme des bâtiments ou des montagnes avant d'atteindre le récepteur.

En outre, certaines méthodes existantes ne permettent pas de détecter certains leurres cohérents « intelligents » bien que la valeur Doppler ne soit pas cohérente des fausses éphémérides.

La présente invention a pour but de remédier à ces inconvénients et de proposer un procédé de vérification d'intégrité des mesures permettant de détecter une grande partie de défaillances et d'attaques, telles que notamment les incohérences liées aux multi-trajets et les attaques par leurres cohérents « intelligents ».

À cet effet, l'invention concerne un procédé de vérification d'intégrité des mesures acquises par une pluralité de récepteurs GNSS, chaque récepteur GNSS étant apte à acquérir dans une fenêtre temporelle une pluralité de mesures GNSS par rapport à chaque satellite visible par ce récepteur GNSS, le procédé comprenant les étapes suivantes mises en œuvre de manière itérative pour chaque fenêtre temporelle glissante :
- pour chaque récepteur GNSS :
   + détermination d'un vecteur de résidus à partir des mesures GNSS acquises par ce récepteur dans la fenêtre temporelle correspondante, au moins une composante de chaque vecteur de résidus correspondant à la différence d'un décalage Doppler réel et d'un décalage Doppler théorique par rapport à un satellite visible par le récepteur GNSS correspondant, le décalage Doppler réel étant déterminé à partir des mesures GNSS correspondant à ce satellite. ;
   + détermination d'une matrice élémentaire de covariance des résidus à partir dudit vecteur de résidus ;
- composition d'une matrice globale de covariance à partir de l'ensemble des matrices élémentaires de covariance ;
- détermination d'une variable de test à partir de cette matrice de covariance ;
- comparaison de la variable de test avec un seuil prédéterminé.

Suivant d'autres aspects avantageux de l'invention, le procédé comprend une ou plusieurs des caractéristiques suivantes, prises isolément ou suivant toutes les combinaisons techniquement possibles :
- le procédé comprenant en outre une étape de détermination pour chaque vecteur de résidus, d'un vecteur de parité correspondant à une projection de ce vecteur de résidus dans un espace de parité ;
- la matrice élémentaire de covariance des résidus est déterminée directement à partir du vecteur de parité associé au vecteur de résidus correspondant ;
- ladite étape de détermination du vecteur de résidus comprend en outre la détermination d'un autre vecteur de résidus dont chaque composante correspond à la différence d'une pseudo-distance réelle et d'une pseudo-distance théorique par rapport à un satellite visible par le récepteur GNSS correspondant, la pseudo-distance réelle étant déterminée à partir des mesures GNSS correspondant à ce satellite ;
les autres étapes étant alors mises en œuvre en relation avec chacun des vecteurs de résidus ;
- le procédé comprenant en outre une étape d'application d'au moins un critère supplémentaire de détermination de l'intégrité des mesures ;
- le ou chaque critère supplémentaire est basé sur le calcul d'au moins une valeur suivante à partir des mesures issues de différents récepteurs GNSS et/ou de différentes itérations desdites étapes :
   - les rapports C/N0 ;
   - le biais d'horloge ;
   - la dérive d'horloge ;
   - les variations de positions estimées ;
   - les différences des positions estimées.
- le ou chaque critère supplémentaire consiste à vérifier au moins l'une des conditions suivantes :
   - les rapports C/N0 sont dans une certaine fourchette ou un certain bruit gaussien ;
   - les variations de biais d'horloge et de dérive d'horloge estimés sont dans une certaine fourchette ;
   - les variations de positions estimées et leurs différences sont dans une certaine fourchette.

L'invention concerne également un programme d'ordinateur comportant des instructions logicielles qui, lorsqu'elles sont exécutées par un ordinateur, mettent en œuvre le procédé tel que défini ci-dessus.

L'invention concerne finalement un système de vérification d'intégrité des mesures acquises par une pluralité de récepteurs GNSS, comprenant des moyens techniques configurés pour mettre en œuvre le procédé tel que défini ci-dessus.

L'invention apparaitra plus clairement à la lecture de la description qui va suivre, donnée uniquement à titre d'exemple non limitatif, et faite en référence aux dessins dans lesquels :
- [Fig. 1] La figure 1 est une vue schématique d'un système de vérification selon l'invention ;
- [Fig. 2] La figure 2 est un organigramme d'un procédé de vérification selon l'invention, le procédé de vérification étant mis en œuvre par le système de vérification de la figure 1.

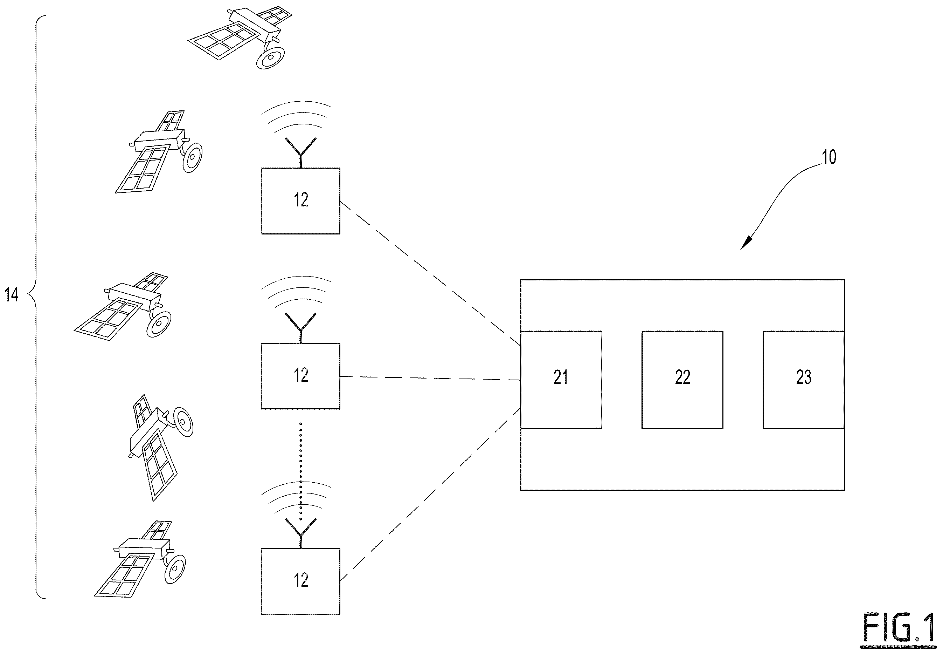

On a en effet illustré sur la figure 1, un système de vérification 10 permettant de vérifier l'intégrité des mesures acquises par une pluralité de récepteurs GNSS 12.

De manière connue en soi, chaque récepteur GNSS 12 présente un récepteur permettant de recevoir des signaux radioélectriques issus d'un système global de positionnement par satellites, appelé également système GNSS. Le système GNSS est par exemple le système GPS (de l'anglais Global Position System) ou alors le système Galileo. Le système GNSS peut aussi être considéré comme plusieurs systèmes en simultané GPS, Galileo, Beidou et autre.

Chaque récepteur GNSS 12 permet ainsi de recevoir ces signaux à partir d'une pluralité de satellites 14 faisant partie du système GNSS, afin de déterminer sa position géographique.

En particulier, pour ce faire, chaque récepteur GNSS 12 est apte à mesurer la distance entre chaque satellite visible par celui-ci et soi-même en effectuant une comparaison entre son horloge interne et le temps d'émission encodé dans chaque signal GNSS reçu.

Une telle mesure est appelée pseudo-distance.

Par ailleurs, chaque récepteur GNSS dispose d'informations concernant la pseudo-distance théorique avec chaque satellite 14 visible.

Une telle distance théorique est fournie par exemple en calculant le temps de trajet obtenu entre chacun des satellites 14 et le récepteur GNSS 12. Ce temps de trajet est corrigé via les éphémérides fournies dans le message de navigation.

Chaque récepteur GNSS 12 est apte à mesurer en outre un décalage fréquentiel entre les signaux transmis par chaque satellite 14 visible et reçus par ce récepteur, dû à l'effet Doppler.

Une telle mesure est appelée décalage Doppler ou plus particulièrement décalage Doppler réel.

Par ailleurs, chaque récepteur GNSS dispose d'informations concernant un décalage Doppler théorique avec chaque satellite 14 visible.

Un tel décalage théorique est fourni par exemple en calculant le décalage Doppler à partir de la vitesse relative de chaque satellite 14 déduite de la vitesse absolue desdits satellites (elle-même calculée à partir des éphémérides) et de la vitesse absolue du récepteur GNSS 12 estimée dans le calcul de la solution PVT (de l'anglais « Position, Velocity, Time » ou « Position, Vitesse, Temps » en français), ou à défaut, à partir des positions GNSS successives ou de tout autre moyen de mesure. Enfin, chaque récepteur GNSS 12 permet de mesurer ou d'estimer au moins l'une des valeurs suivantes :
- le rapport C/N0 (i.e. rapport signal sur bruit) ;
- le biais d'horloge (i.e. biais d'horloge estimé conjointement à la position en trois dimensions du récepteur) ;
- la dérive de son horloge par rapport à l'horloge des systèmes GNSS (i.e. dérive estimée conjointement à la vitesse en trois dimensions du récepteur) .

À chaque instant, chaque récepteur GNSS 12 est apte à recevoir des signaux GNSS à partir d'un nombre limité de satellites 14. Ces satellites sont alors appelés visibles par le récepteur GNSS 12 correspondant.

Il doit être toutefois compris qu'avec le temps, les positions respectives entre le récepteur GNSS 12 et les satellites changent de sorte qu'au moins certains satellites 14 ne sont plus visibles et certains autres deviennent alors visibles. Des masquages peuvent notamment avoir lieu lorsque le récepteur GNSS 12 évolue dans un milieu encaissé où la vision du ciel est partiellement masquée par des infrastructures naturelles et/ou humaines.

Le système de vérification 10 est connecté à chacun des récepteurs GNSS 12 au moins dans une fenêtre temporelle donnée.

Ce système de vérification 10 peut par exemple être connecté au récepteur GNSS 12 correspondant par toute liaison techniquement possible, notamment une liaison radio.

Le système de vérification 10 est alors apte à recevoir des mesures GNSS acquises ou déterminées par les récepteurs GNSS 12 dans au moins certaines fenêtres temporelles.

Lorsque la réception de ces données est possible, le récepteur GNSS 12 correspondant est alors appelé accessible.

Autrement, ce récepteur GNSS 12 est appelé inaccessible.

Le système de vérification 10 peut ainsi former une unité centrale reliée à l'ensemble de récepteurs GNSS 12.

Alternativement, le système de vérification 10 est intégré dans au moins l'un des récepteurs GNSS 12. Dans un tel cas, il est relié à des moyens permettant de transmettre des mesures acquises par ce récepteur 12 par une liaison interne.

En référence à la figure 1, le système de vérification 10 comprend un module d'entrée 21, un module de traitement 22 et un module de sortie 23.

Le module d'entrée 21 présente un module de communication permettant de recevoir des données issues des récepteurs GNSS 12. Le module d'entrée 21 présente ainsi par exemple une interface de communication radio.

Le module de traitement 22 permet de traiter l'ensemble des données reçues par le module d'entrée 21 pour vérifier leur intégrité, comme cela sera expliqué en détail par la suite.

Enfin, le module de sortie 23 permet de délivrer le résultat de la vérification effectuée par le module de traitement 22 à tout système intéressé. Un tel système intéressé peut par exemple comprendre une interface de communication avec un opérateur.

Selon un mode particulier de réalisation de l'invention, chacun de ces modules 21 à 23 est implémenté au moins partiellement par un logiciel exécutable par un processeur. Dans un tel cas, le système de vérification 10 comprend en outre un processeur qui est apte alors à mettre en œuvre le logiciel associé à un tel module et une mémoire qui est apte à stocker un tel logiciel.

En complément ou de manière alternative, chacun des modules précités 21 à 23 présente au moins partiellement un circuit logique programmable de type FPGA (de l'anglais Field Programmable Gate Array) ou alors ASIC (de l'anglais Application-Specific Integrated Circuit).

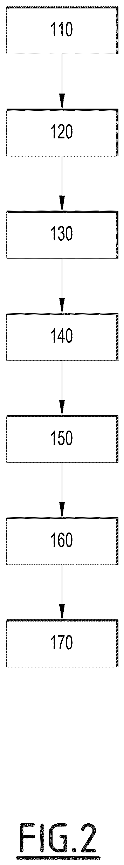

Le système de vérification 10 est apte à mettre en œuvre un procédé de vérification qui sera désormais expliqué en référence à la figure 2 présentant un organigramme de ses étapes.

Initialement, il est considéré que chacun des récepteurs GNSS 12 acquiert dans une fenêtre temporelle, par exemple d'une longueur prédéterminée, une pluralité de mesures GNSS qui correspondent par exemple aux pseudo-distances réelles et aux décalages Doppler avec les satellites correspondants.

Dans tout ce qui suit, il est supposé que les récepteurs GNSS 12 transmettent ces mesures au système de vérification 10 qui effectue alors l'ensemble des traitements numériques décrits en détail par la suite.

Alternativement, au moins certains de ces traitements peuvent être effectués directement par le récepteur GNSS 12 correspondant et un résultat de ce traitement peut être transmis au système de vérification 10 pour un autre traitement.

Les étapes suivantes du procédé sont mises en œuvre de manière itérative pour chaque fenêtre temporelle déterminée de manière glissante à partir de la fenêtre temporelle précédente.

Lors d'une étape initiale 110, le module de traitement 22 détermine pour chaque récepteur GNSS 12 un vecteur de résidus **r** à partir des mesures GNSS transmises par ce récepteur 12 dans la fenêtre temporelle correspondante.

En particulier, chaque composante d'un tel vecteur de résidus **r** correspond à la différence d'un décalage Doppler réel et d'un décalage théorique à l'un des satellites visibles par le récepteur GNSS correspondant.

Dans certains modes de réalisation, un autre vecteur de résidus **r1** dont les composantes correspondent aux différences des pseudo-distances réelles et théoriques correspondantes est déterminé lors de cette étape 110 pour chaque récepteur GNSS 12. Il est à noter que la position du récepteur doit satisfaire au mieux les différentes estimations de pseudo-distances théoriques entre chacun des satellites et le récepteur à l'instant t. Cette distance théorique peut donc être affinée par la méthode de Gauss-Newton (moindres carrés) de manière à ce que la différence entre pseudo-distances théoriques et observés soit la plus petite possible.

Dans la suite, les étapes 120 à 160 sont décrites en relation avec le vecteur de résidus **r.** Toutefois, il doit être compris que ces étapes 120 à 160 peuvent être mises en œuvre de manière analogue en relation avec le vecteur de résidus **r1.** Dans ce dernier cas, ces étapes 120 à 160 peuvent être mises en œuvre en parallèle en relation avec ces vecteurs de résidus différents.

Alternativement, les composantes du vecteur **r1** peuvent être rajoutées dans le vecteur **r** et les étapes 120 à 160 peuvent être mises en œuvre une seule fois mais en utilisant un vecteur **r** ainsi obtenu (i.e. vecteur correspondant à la concaténation des vecteurs r et **r1** tels que définis ci-dessus).

Lors d'une étape 120 suivante, le module de traitement 22 détermine pour chaque récepteur GNSS 12 et pour chaque vecteur de résidus r associé à ce récepteur GNSS 12 un vecteur de parité **p.**

Ce vecteur de parité **p** correspond alors à une projection du vecteur de résidus correspondant dans un espace de parité. Cette projection est effectuée en utilisant une matrice **W** qui est constituée par les vecteurs de l'espace nul orthogonal à la matrice jacobienne de la matrice d'observation **H : W'.H=**0**.**

Autrement dit : $p = W ′ . r$

La projection de chaque vecteur de résidus dans l'espace de parité permet d'éliminer les composantes redondantes du vecteur de résidus initial.

En utilisant cet espace de parité, il est possible de diminuer de quatre la dimension de chaque vecteur de résidus.

Lors de l'étape 130 suivante, le module de de traitement 22 détermine une matrice élémentaire de covariance **Γ**ᵢ associée à chaque vecteur de résidus directement à partir du vecteur de parité associé à ce vecteur de résidus.

Autrement dit, chaque matrice élémentaire de covariance est déterminée en utilisant la relation suivante : ${Γ}_{i} = E \left[{p}_{i}.{p}_{i}^{T}\right]$ où $E \left[…\right]$ signifie l'espérance mathématique et **p**ᵢ correspond à un vecteur de parité **p** ayant l'indice i sur une fenêtre glissante de N échantillon temporel.

Lors de l'étape 140 suivante, le module de traitement 22 compose une matrice globale de covariance **Γ** à partir de l'ensemble des matrices élémentaires de covariance **Γ**ᵢ déterminées lors de l'étape 130 précédente.

En particulier, cette matrice globale de covariance **Γ** comprend une concaténation diagonale des matrices élémentaires de covariance **Γ**ᵢ telles que déterminées précédemment.

Lors de l'étape 150 suivante, le module de traitement 22 détermine une variable de test à partir de la matrice globale de covariance **Γ** (composée alors des matrices élémentaires de covariance **Γ**ᵢ) et avantageusement à partir de l'ensemble des vecteurs de parité **p**ᵢ associés à la fenêtre temporelle courante.

En particulier, cette variable de test est déterminée suivant la formule suivante : $Tc = {\sum }_{i = 1}^{M} {p}_{i}^{t} {Γ}_{i}^{- 1} {p}_{i}$

Lors de l'étape 160 suivante, le module de traitement 22 compare la variable de test avec un seuil prédéterminé. Ce seuil prédéterminé peut être défini en fonction de la nature du vecteur de résidus utilisé lors des étapes 120 à 160 (i.e. vecteur **r** ou **r1).**

Ainsi, par exemple, lorsque cette variable de test est supérieure à ce seuil, il peut être considéré que l'intégrité des mesures est rompue. Autrement, les mesures sont considérées intègres selon ce critère et l'étape 170 suivante est mise en œuvre. En variante, lorsque les étapes 120 à 160 ont été mises en œuvre en parallèle en relation avec les vecteurs de résidus différents, l'étape 170 suivante est mise en œuvre uniquement lorsque les mesures ont été considérées intègres lors de chaque mise en œuvre de l'étape 160.

Lorsque les mesures ne sont pas intègres, dans certains modes de réalisation, il est également possible de déterminer le récepteur GNSS 12 causant la non-intégrité des mesures.

Cela peut par exemple être effectué en éliminant un par un les récepteurs GNSS 12 correspondants jusqu'à obtenir les mesures intègres.

Ensuite, le résultat de la comparaison de la variable de test avec le seuil prédéterminé et éventuellement l'identifiant du récepteur GNSS 12 causant cette non-intégrité sont transmis à tout système intéressé via le module de sortie 23.

Les actions adéquates peuvent alors être entreprises par ce système intéressé.

Lors de l'étape 170, le module de traitement 22 met en œuvre au moins un critère supplémentaire pour déterminer l'intégrité des mesures.

Dans le mode de réalisation décrit, cette étape 170 est mise en œuvre à la suite de l'étape 160 lorsque les mesures ont été considérées intègres selon le critère appliqué lors de cette étape 160 (éventuellement lors de chaque mise en œuvre de cette étape 160).

Selon d'autres modes de réalisation, l'étape 170 est mise en œuvre avant l'étape 160 et éventuellement, avant au moins certaines des autres étapes précitées. Dans un tel cas, ces étapes peuvent par exemple être mises en œuvre uniquement lorsque lors de l'étape 170, les mesures sont considérées intègres.

Selon encore un autre mode de réalisation, l'étape 170 est mise en œuvre en parallèle avec l'étape 160 (ou au moins lors d'une itération de cette étape). Dans un tel cas, les résultats de chacune de ces étapes 160, 170 ou éventuellement de chaque itération de l'étape 160 et de l'étape 170, peuvent être comparés entre eux lors d'une autre étape avant de déterminer l'intégrité des mesures.

Avantageusement, le ou chaque critère supplémentaire est basé sur le calcul d'au moins une valeur suivante à partir des mesures issues de différents récepteurs GNSS 12 et/ou différents cycles de mesure :
- les rapports C/N0 ;
- le biais d'horloge ;
- la dérive d'horloge ;
- les variations de positions estimées ;
- les différences des positions estimées.

Par exemple, selon un premier critère supplémentaire, pour que les mesures soient considérées intègres, les rapports C/N0 doivent rester dans une certaine fourchette ou un certain bruit gaussien.

Selon un deuxième critère supplémentaire, pour que les mesures soient considérées intègres, les variations de biais et de dérive d'horloge estimés doivent rester dans une certaine fourchette.

Selon un troisième critère, pour que les mesures soient considérées intègres, les variations de positions estimées et leurs différences doivent rester dans une certaine fourchette.

D'autres critères restent également possibles.

On conçoit alors que la présente invention présente un certain nombre d'avantages.

Plus particulièrement, l'invention permet d'étendre la statistique de surveillance des mesures non-intègres à l'ensemble des données brutes accessibles sur un récepteur GNSS.

Cela permet alors de détecter davantage de défaillances et d'attaques en comparaison avec les méthodes de l'état de la technique.

En particulier, cela permet de détecter les incohérences liées aux multi-trajets et les attaques par leurres cohérents « intelligents ».

Bien entendu, de nombreux autres modes de réalisation de l'invention sont également possibles.

## Revendications

1. Procédé de vérification d'intégrité des mesures acquises par une pluralité de récepteurs GNSS (12), chaque récepteur GNSS (12) étant apte à acquérir dans une fenêtre temporelle une pluralité de mesures GNSS par rapport à chaque satellite (14) visible par ce récepteur GNSS (12), le procédé comprenant les étapes suivantes mises en œuvre de manière itérative pour chaque fenêtre temporelle glissante :
- pour chaque récepteur GNSS :
+ détermination (110) d'un vecteur de résidus à partir des mesures GNSS acquises par ce récepteur (12) dans la fenêtre temporelle correspondante, au moins une composante de chaque vecteur de résidus correspondant à la différence d'un décalage Doppler réel et d'un décalage Doppler théorique par rapport à un satellite (14) visible par le récepteur GNSS (12) correspondant, le décalage Doppler réel étant déterminé à partir des mesures GNSS correspondant à ce satellite (14). ;
+ détermination (130) d'une matrice élémentaire de covariance des résidus à partir dudit vecteur de résidus ;
- composition (140) d'une matrice globale de covariance à partir de l'ensemble des matrices élémentaires de covariance ;
- détermination (150) d'une variable de test à partir de cette matrice de covariance ;
- comparaison (160) de la variable de test avec un seuil prédéterminé.

2. Procédé selon la revendication 1, comprenant en outre une étape (120) de détermination pour chaque vecteur de résidus, d'un vecteur de parité correspondant à une projection de ce vecteur de résidus dans un espace de parité.

3. Procédé selon la revendication 2, dans lequel la matrice élémentaire de covariance des résidus est déterminée directement à partir du vecteur de parité associé au vecteur de résidus correspondant.

4. Procédé selon l'une quelconque des revendications précédentes, dans lequel ladite étape de détermination (110) du vecteur de résidus comprend en outre la détermination d'un autre vecteur de résidus dont chaque composante correspond à la différence d'une pseudo-distance réelle et d'une pseudo-distance théorique par rapport à un satellite (14) visible par le récepteur GNSS (12) correspondant, la pseudo-distance réelle étant déterminée à partir des mesures GNSS correspondant à ce satellite (14) ;
les autres étapes étant alors mises en œuvre en relation avec chacun des vecteurs de résidus.

5. Procédé selon l'une quelconque des revendications précédentes, comprenant en outre une étape (170) d'application d'au moins un critère supplémentaire de détermination de l'intégrité des mesures.

6. Procédé selon la revendication 5, dans lequel le ou chaque critère supplémentaire est basé sur le calcul d'au moins une valeur suivante à partir des mesures issues de différents récepteurs GNSS (12) et/ou de différentes itérations desdites étapes :
- les rapports C/N0 ;
- le biais d'horloge ;
- la dérive d'horloge ;
- les variations de positions estimées ;
- les différences des positions estimées.

7. Procédé selon la revendication 5 ou 6, dans lequel le ou chaque critère supplémentaire consiste à vérifier au moins l'une des conditions suivantes :
- les rapports C/N0 sont dans une certaine fourchette ou un certain bruit gaussien ;
- les variations de biais d'horloge et de dérive d'horloge estimés sont dans une certaine fourchette ;
- les variations de positions estimées et leurs différences sont dans une certaine fourchette.

8. Programme d'ordinateur comportant des instructions logicielles qui, lorsqu'elles sont exécutées par un ordinateur, mettent en œuvre le procédé selon l'une quelconque des revendications précédentes.

9. Système de vérification d'intégrité (10) des mesures acquises par une pluralité de récepteurs GNSS, comprenant des moyens techniques (21, 22, 23) configurés pour mettre en œuvre le procédé selon l'une quelconque des revendications 1 à 7.
